# DEMANDE DE BREVET EUROPEEN

(11) **EP 0 781 674 A1**
(43) Date de publication de la demande: **02.07.1997**
(21) Numéro de dépôt: 96120352.8
(22) Date de dépôt: 18.12.1996
(51) Int. Cl.: B60H 1/00

(54) **Dispositif de commande à mode figé, notamment pour une installation de chauffage, ventilation et/ou climatisation d'un véhicule automobile**

(30) Priorité: 27.12.1995 FR 9515571
(71) Demandeur: VALEO CLIMATISATION, 78321 La Verrière (FR)
(72) Inventeur: Sarbach, Jean-Charles, 28320 Gallardon (FR)
(74) Mandataire: Gamonal, Didier

(57) **Abrégé**

Le dispositif de commande comprend un ensemble clavier 10 afficheur 19, relié à un ensemble de traitement comprenant des mémoires d'entrée 20, une unité de régulation 40 recevant des grandeurs captées 30, ainsi qu'une mémoire de sortie 80 pour commander les pilotes d'actionneurs 90. Une touche spéciale 11 agit sur un automate 41 qui gère une commande de blocage F8 capable de figer la mémoire de sortie 80. L'automate 41 répond également à la mise en marche de l'installation (clé de contact). La fin du mode figé peut être obtenue par l'actionnement d'un touche quelconque du clavier.

## Description

L'invention concerne les dispositifs de commande électronique d'installation de chauffage, ventilation et/ou climatisation de véhicule automobile.

Ces dispositifs de commande électronique offrent des possibilités appréciées de régulation, qui sont de nature à améliorer sensiblement le confort des usagers. A l'aide d'un organe de saisie tel qu'un clavier, ceux-ci peuvent en effet définir directement les paramètres aérothermiques désirés, en particulier la température de l'air distribué et le mode de distribution de celui-ci.

La Demanderesse a cependant observé qu'il était souhaitable d'améliorer encore le confort. En effet, lorsque par exemple un automobiliste passe au péage, l'ouverture de la vitre crée un changement dans l'habitacle, que la régulation tend à surcompenser, d'une manière assez peu utile, compte-tenu de la brièveté de l'événement. Par ailleurs, une ouverture prolongée de la vitre ou du toit ouvrant est généralement décidée en connaissance des conséquences de confort qui en résultent, alors que la régulation va précisément chercher à compenser celles-ci. En outre, le jeu correcteur de la régulation est accompagné d'actions mécaniques qui, malgré les progrès accomplis, restent sensibles aux usagers, par les variations de ventilation et de température qui les accompagnent, voire par les bruits qui en résultent.

La présente invention vient apporter une solution à ce problème.

Cette solution part d'un dispositif de commande, notamment pour une installation de chauffage, ventilation et/ou climatisation d'un véhicule automobile, du type comprenant des organes de commande permettant à l'utilisateur de définir un multiplet de paramètres aérothermiques en cours, et des moyens de traitement capables de convertir les paramètres aérothermiques de ce multiplet en valeurs de réglages d'éléments de l'installation.

Selon une définition générale de l'invention, les moyens de traitement comprennent des moyens capables de figer prioritairement, sur une commande de blocage, lesdites valeurs de réglages des éléments de l'installation; et les organes de commande comprennent en outre une fonction accessible à l'utilisateur, et permettant de délivrer aux moyens de traitement une telle commande de blocage. De la sorte, les valeurs de réglages sont conservées quelle que soit l'évolution de l'aérothermie dans l'habitacle.

Dans un mode de réalisation préférentiel, les moyens de traitement comprennent une mémoire des valeurs de réglage en cours, laquelle est verrouillée en réponse à la commande de blocage, tandis que le multiplet de paramètres aérothermiques en cours est ignoré. Ce verrouillage de la mémoire persiste avantageusement jusqu'à sa levée par l'utilisateur.

Ladite fonction accessible à l'utilisateur peut être réalisée sous la forme d'une touche dédiée au blocage des valeurs de réglage, accompagnée de préférence d'un voyant. De façon intéressante, les moyens de traitement sont capables d'élaborer eux-mêmes automatiquement la commande de blocage à la mise en marche de l'installation (clé de contact), qui démarre alors sur la base des réglages précédemment bloqués.

A la levée du blocage par l'utilisateur, qui peut être commandée par l'actionnement de l'une parmi certaines au moins des commandes utilisateur, les moyens de traitement sont agencés pour rétablir les valeurs de réglages correspondant à un multiplet de paramètres en cours mémorisé ou pré-programmé.

Selon un mode de réalisation particulier, les moyens de traitement comprennent un automate ayant un état logique régulation/blocage, des moyens pour faire passer l'automate à l'état de blocage si la fonction de blocage est excitée pendant l'état de régulation, et des moyens pour faire passer l'automate à l'état de régulation en cas d'actionnement de l'une parmi certaines au moins des commandes utilisateur quelconque pendant l'état de blocage, cet automate contrôlant le figeage prioritaire desdites valeurs de réglages des éléments de l'installation.

D'autres caractéristiques et avantages de l'invention apparaîtront à l'examen de la description détaillée ci-après et des dessins annexés, sur lesquels:
- la figure 1 est le schéma de principe du dispositif de commande d'une installation de chauffage, ventilation et/ou climatisation ;
- la figure 2 est le diagramme d'un premier automate permettant la mise en oeuvre de l'invention ;
- la figure 3 est le diagramme d'un second automate incorporant la mise en oeuvre de l'invention ; et
- la figure 4 est un exemple de clavier/afficheur utilisateur, avec mise en oeuvre de l'invention.

Une installation de chauffage, ventilation et/ou climatisation comprend notamment une interface utilisateur 10/19, comprenant une pluralité de touches de saisie, de type bouton poussoir ou rotatif, ou curseur, ou touche sensitive, destinées à définir les paramètres aérothermiques de tout ou partie d'un habitacle de véhicule automobile, par exemple. Il s'y ajoute une visualisation dépendant de l'état de l'installation et de l'actionnement des touches de saisie. L'interface utilisateur est avantageusement du type clavier/afficheur (10,19), par exemple logé dans la planche de bord du véhicule entre le conducteur et le passager avant droit.

Les paramètres aérothermiques comprennent notamment le débit d'air (actionneur: un groupe moto-ventilateur GMV), la température (actionneurs: un volet de mélange VM entre l'air chaud et l'air froid, un radiateur-réchauffeur RAD, s'il est réglable, éventuellement un évaporateur de climatisation noté CLIM), et le mode de distribution de l'air traité (actionneurs: différents volets distributeurs VDi).

Le clavier 10 est connecté à une mémoire utilisateur 20, qui comprend au moins une zone, dite "de réglage en cours". Dans cette zone est mémorisé un multiplet de paramètres (Muᵢ), qui correspond à un état désiré des paramètres aérothermiques.

A partir de là une unité de régulation 40 définit des valeurs de réglage VRᵢ, pour les pilotes 90 des actionneurs. On peut utiliser à cet effet un tableau de correspondance, dont les entrées sont un multiplet de paramètres, des grandeurs captées (30), telles que la température interne, éventuellement la température externe, et, le cas échéant, une rétroaction tenant compte des valeurs de réglage elles-mêmes.

Ainsi, lorsque l'utilisateur définit par saisie un ou plusieurs paramètres à l'aide des touches du clavier 10, ces paramètres sont mémorisés sous la forme d'un multiplet de paramètres en cours d'un format donné. Ce multiplet est ensuite utilisé pour définir les valeurs de réglage du groupe moto-ventilateur GMV, du volet de mélange VM, éventuellement du radiateur réchauffeur d'air RAD et de l'évaporateur CLIM, et des différents volets distributeurs VDi.

De préférence, la mémoire 20 contient aussi plusieurs zones de programmation, pour recevoir des multiplets de même nature que le multiplet de paramètres en cours, et définis à l'avance par l'usager ou d'une autre manière. Des touches dites de programmation permettent la mise en oeuvre de l'un de ces modes programmés, en tant que multiplet de paramètres en cours.

L'usager peut par exemple mémoriser le multiplet de paramètres en cours, en tant que multiplet de paramètrés programmés.

Un tel dispositif permet à l'utilisateur de programmer des réglages adaptés à son métabolisme, ou de programmer plusieurs niveaux de confort, ou bien de programmer une convergence rapide (fort débit d'air) ou une convergence lente (faible débit d'air) vers les paramètres désirés, ou encore de programmer des réglages adaptés à la consommation de tabac.

Cependant, dans certaines situations particulières, la richesse et la souplesse offertes par ces dispositifs ont pour contrepartie des inconvénients, mineurs mais réels, énoncés au début de la présente description.

Selon l'invention, il est ajouté au clavier 10 une touche dédiée 11, dite ("FIX"). Il lui correspond au niveau de l'afficheur 19 un voyant 18, allumé lorsque la fonction FIX est en service.

Les valeurs de réglage des actionneurs sont mémorisées dans une mémoire de sortie 80, qui commande les pilotes 90 des actionneurs.

Il est adjoint à l'unité de régulation 40 un automate 41, capable d'agir sur la mémoire 80 pour en figer le contenu, soit par une entrée directe de blocage prévue dans la mémoire, comme illustré, soit par une porte ET (non représentée) qui conditionnerait le rafraîchissement des informations mémorisées. Dans ce mode figé, le voyant 18 est actionné.

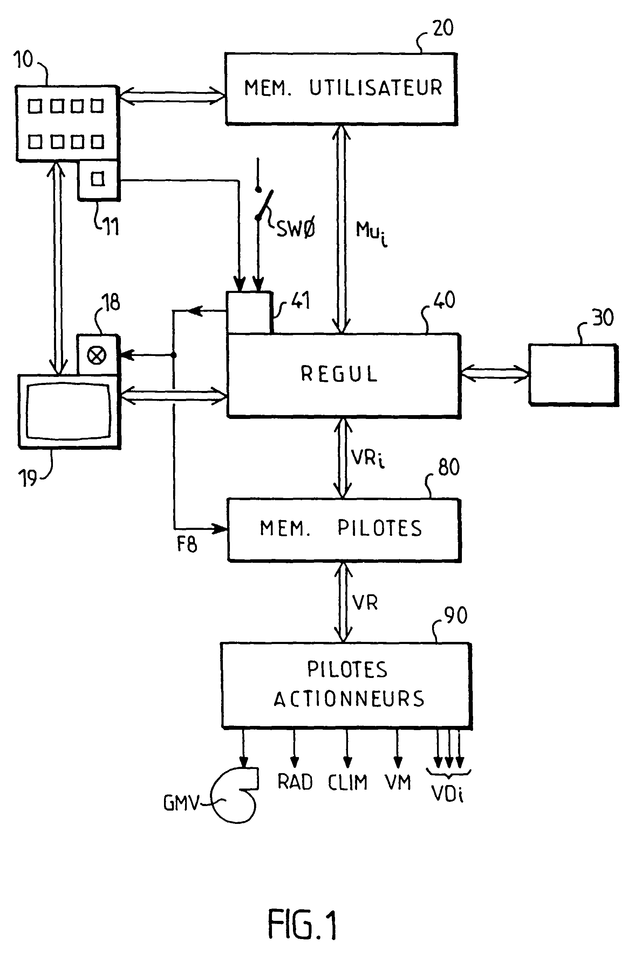

Le schéma de principe de la figure 1 fait apparaître la mémoire 80 en tant que mémoire de sortie. Cela ne signifie pas qu'elle est nécessairement en sortie physique de l'unité de régulation 40. Toute mémoire interne de cette unité 40, qui détermine les valeurs de réglage peut être figée pour jouer le rôle de la mémoire 80. L'inhibition des calculs de régulation dans l'unité 40 réaliserait la même fonction.

L'automate 41 réagit à l'actionnement d'une touche, et, de préférence, à la mise en service de l'installation, représentée ici par la fermeture de l'interrupteur de clé de contact SW0.

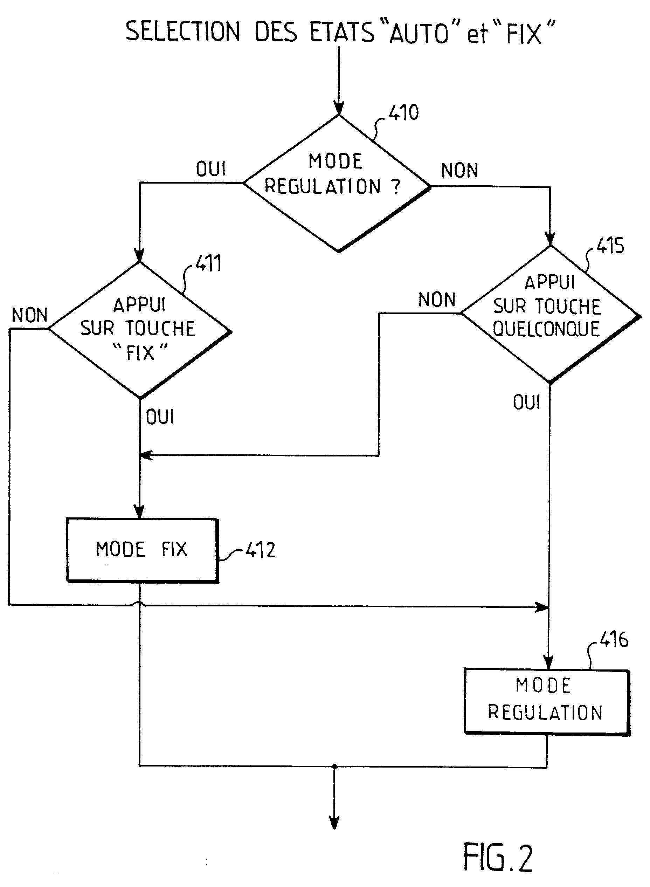

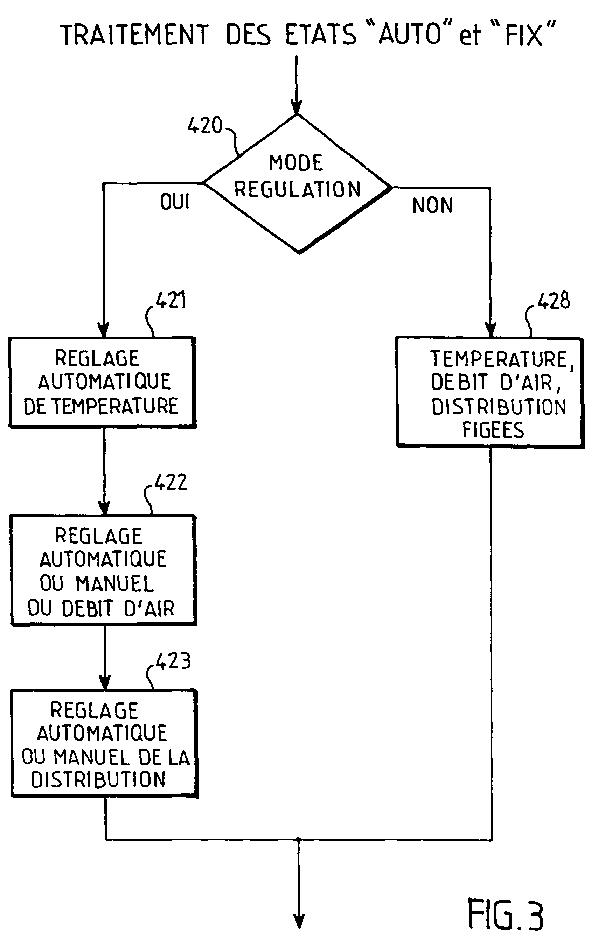

Les figures 2 et 3 illustrent respectivement la gestion et l'effet de l'automate 41, sur la base d'un dispositif à deux états "Régulation" et "FIX", dont un et un seul est vrai à tout moment.

Un test 410 (figure 2) détermine si l'état en cours est régulation. Si oui, l'appui sur la touche FIX en 411 détermine le passage à l'état FIX, en 412, à défaut de quoi, on reste en mode régulation, en 416. Si l'état en cours n'est pas régulation (donc FIX), l'appui sur une touche quelconque en 415 fait retourner au mode régulation, à défaut de quoi, on reste en mode FIX, en 412. A cet égard, il est intéressant de limiter les touches surveillées en 415 à un sous-ensemble des touches du clavier. On pourrait notamment exclure la touche FIX elle-même.

En mode régulation (test 420, figure 3), on procède selon la fonction de transfert de régulation au réglage automatique de température 421, au réglage automatique ou dirigé manuellement du débit d'air 422, ainsi qu'au réglage automatique ou dirigé manuellement de la distribution d'air 423.

En mode ou état FIX, les réglages de température, débit d'air et distribution demeurent figés (428).

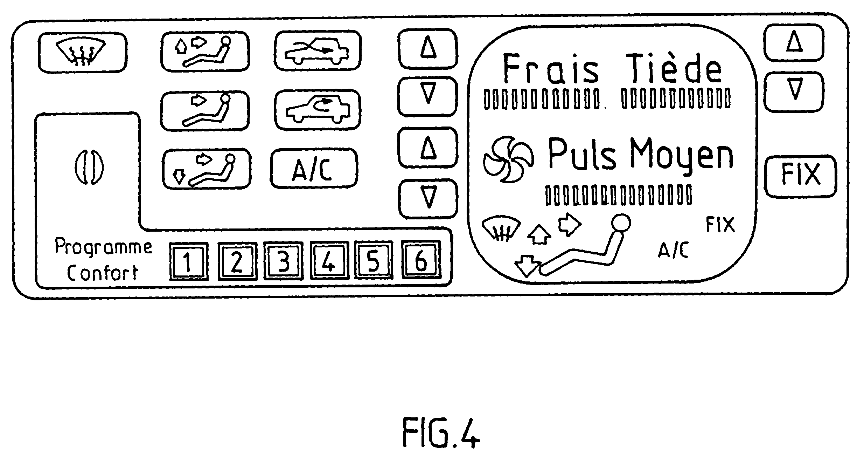

La figure 4 illustre un exemple de clavier-afficheur utilisé selon l'invention. Le pavé en L, en bas à gauche, contient l'affichage du mode programmé en cours (le cas échéant), surmontant les touches de sélection de programmes préenregistrés. En haut à gauche, sept touches permettent la sélection de paramètres : pare-brise, habitacle, recyclage ou non, et climatisation (A/C). En partie droite, un pavé rectangulaire d'affichage (afficheur principal) permet de visualiser en bas les états résultant des sept touches précitées, et en haut les réglages de la température en deux zones, ainsi que du débit du pulseur, les sélections de paramètres correspondants, le cas échéant, étant accessibles par trois paires de touches de curseur circonvoisines.

On remarque la touche FIX, et le voyant correspondant dans le pavé rectangulaire. La fonction FIX supprime les variations de réglage de température et/ou de débit d'air. Ceci permet d'ouvrir une vitre sans qu'il s'ensuive un effet de gêne thermique ou aéraulique. Au contraire, l'usager ressent les effets attendus de l'ouverture de la vitre, ou bien du toit, que cette ouverture soit brève ou prolongée. Elle peut servir aussi dans les situations de circulation très encombrée.

Pendant ce temps, l'affichage FIX apparaît sur l'afficheur principal. Le programme précédent n'est plus affiché ou affiché à zéro. Les informations sur l'état du système demeurent affichées. L'appui sur une touche permet de retrouver l'état antérieur, un état programmé, ou bien de définir un état nouveau.

Bien que cette fonction FIX soit d'application générale, elle est particulièrement intéressante avec des modes à forte automatisation, où la régulation peut être amenée à de nombreux changements de réglages successifs pour corriger les effets d'un changement concernant l'habitacle ou la conduite du véhicule.

L'invention ne se limite pas au mode de réalisation décrit ci-avant, mais elle embrasse toutes les variantes que pourra développer l'homme de l'art dans le cadre des revendications ci-après. Il serait par exemple envisageable de ne figer qu'une partie des réglages. Une autre variante consisterait à sortir du mode FIX par appui sur la touche FIX, qui fonctionnerait alors en mode bascule.

## Revendications

1. Dispositif de commande, notamment pour une installation de chauffage, ventilation et/ou climatisation d'un véhicule automobile, du type comprenant des organes de saisie/visualisation (10,19) permettant à l'utilisateur de définir un multiplet de paramètres aérothermiques en cours (Muᵢ), et des moyens de traitement (20-40) capables de convertir les paramètres aérothermiques de ce multiplet en valeurs de réglages d'éléments de l'installation (VRᵢ), en fonction de critères de régulation, caractérisé en ce que les moyens de traitement (20-40) comprennent en outre des moyens de verrouillage (80, 801) capables de figer prioritairement, sur une commande de blocage (F8), lesdites valeurs de réglages des éléments de l'installation, ainsi que des moyens (41) pour gérer la commande de blocage, et en ce que les organes de saisie/visualisation comprennent en outre une fonction (11) accessible à l'utilisateur, pour demander aux moyens de gestion (41) de délivrer une telle commande de blocage (F8), de sorte que les valeurs de réglages au moment du blocage soient conservées quelle que soit l'évolution de l'aérothermie dans l'habitacle.

2. Dispositif selon la revendication 1, caractérisé en ce que les moyens de verrouillage comprennent une mémoire (80) des valeurs de réglage en cours, laquelle est figée (801) en réponse à la commande de blocage (F8), tandis que les valeurs de réglages (VRᵢ) correspondant au multiplet de paramètres aérothermiques en cours (Muᵢ) sont alors ignorées.

3. Dispositif selon l'une des revendications 1 et 2, caractérisé en ce que ladite fonction (11) est accessible à l'utilisateur sous la forme d'une touche dédiée au blocage des valeurs de réglage.

4. Dispositif selon l'une des revendications 1 à 3, caractérisé en ce que les moyens de gestion (41) sont capables de réagir à la mise en marche de l'installation par une mise en oeuvre automatique de la commande de blocage (F8).

5. Dispositif selon l'une des revendications 1 à 4, caractérisé en ce que les moyens de gestion (41) sont agencés pour maintenir le verrouillage jusqu'à sa levée par l'utilisateur, après quoi sont instaurées les valeurs de réglages (VRᵢ) correspondant à un multiplet de paramètres en cours mémorisé ou pré-programmé (Muᵢ).

6. Dispositif selon la revendication 5, caractérisé en ce que les moyens de gestion (41) opèrent la levée du blocage en réponse à l'actionnement de l'une parmi certaines au moins des commandes utilisateur.

7. Dispositif selon la revendication 6, caractérisé en ce que les moyens de gestion (41) comprennent un automate ayant un état logique régulation/blocage, des moyens pour faire passer l'automate à l'état de blocage si la fonction de blocage est excitée pendant l'état de régulation, et des moyens pour faire passer l'automate à l'état de régulation en cas d'actionnement de l'une parmi certaines au moins des commandes utilisateur quelconque pendant l'état de blocage, cet automate contrôlant le figeage prioritaire desdites valeurs de réglages des éléments de l'installation.

8. Dispositif selon l'une des revendications précédentes, caractérisé en ce que les valeurs de réglages (VRᵢ,VR9) comprennent au moins un débit d'air du pulseur que comprend l'installation, ainsi que l'état d'un actionneur/régulateur de température, et celui d'actionneurs de distribution de l'air traité par ladite installation.
